# FASCICULE DE BREVET EUROPEEN

(11) **EP 3 184 868 B1**
(45) Date de publication et mention de la délivrance du brevet: **15.06.2022**
(21) Numéro de dépôt: 16206812.6
(22) Date de dépôt: 23.12.2016
(51) Int. Cl.: F16L 5/04, H02G 3/22

(54) **ENSEMBLE COMPRENANT UN ÉLÉMENT TRAVERSANT ET AU MOINS UN MANCHON COUPE-FEU**
EINHEIT, DIE EIN QUERELEMENT UND MINDESTENS EINE BRANDSCHUTZMUFFE UMFASST
ASSEMBLY COMPRISING A CROSS MEMBER AND AT LEAST ONE FIRE SLEEVE

(30) Priorité: 23.12.2015 FR 1563177
(43) Date de publication de la demande: 28.06.2017
(73) Titulaire: SAINT-GOBAIN PAM BATIMENT, 54700 Pont-à-Mousson (FR)
(72) Inventeur: SUBRA, Renaud, 57000 METZ (FR); MARTIN, Alain, 54380 SAIZERAIS (FR)
(74) Mandataire: Lavoix

(56) Documents cités:
- EP-A2- 0 062 298
- FR-A1- 2 348 328
- US-A- 4 086 736

## Description

La présente invention concerne un ensemble comprenant un élément traversant destiné à traverser une paroi de séparation selon une direction longitudinale.

L'invention concerne également un procédé d'installation d'un manchon coupe-feu au niveau d'une paroi de séparation traversée par un élément traversant.

Dans les bâtiments, pour prévenir ou limiter la propagation d'un incendie d'un côté d'une paroi de séparation, telle qu'une dalle ou un mur, à l'autre côté, il est connu d'isoler thermiquement le côté de la paroi de séparation exposé au feu, et de dissiper la chaleur du côté non exposé au feu. Ceci permet de limiter l'élévation en température du côté non exposé au feu et donc d'empêcher ou de retarder l'apparition de flammes du côté initialement non exposé au feu.

Toutefois, si un élément traversant, comme par exemple une canalisation à base de fer, traverse la paroi de séparation, les solutions classiques précitées sont d'une efficacité limitée, du fait que l'élément traversant constitue un très bon conducteur de la chaleur générée du côté exposé au feu vers le côté non exposé au feu.

Pour retarder la propagation d'un incendie, il est connu d'entourer l'élément traversant par un manchon coupe-feu à base de laine minérale ou par du plâtre posé en bandelettes ou projeté autour de l'élément traversant. Ces solutions présentent systématiquement au moins l'un des inconvénients suivants : difficulté d'installation, encombrement important, matériau coupe-feu onéreux et difficulté d'atteindre des durées coupe-feu d'au moins quatre heures.

EP-A-0 062 298 décrit l'utilisation d'un matériau intumescent dans un passage annulaire constitué d'une enveloppe.

Un but de l'invention est de fournir un ensemble tel que décrit ci-dessus, qui permette de lutter efficacement contre la propagation d'un incendie du côté de la paroi de séparation exposé au feu vers l'autre côté, et qui soit d'une réalisation et d'une installation simples et économiques.

A cet effet, l'invention a pour objet un ensemble selon la revendication 1.

Selon des modes particuliers de réalisation, l'ensemble comprend l'une ou plusieurs des caractéristiques correspondant aux revendications 2 à 10, et des caractéristiques suivantes, prise(s) isolément ou selon toutes les combinaisons techniquement possibles :
- le manchon comprend une substance ayant une capacité thermique volumique d'au moins 1000 kJ/(m³.K) et/ou une chaleur latente massique de changement d'état physique, dans une plage de températures comprises entre 0°C et 210°C, au moins égale à 200 kJ/kg ;
- le manchon comprend, à au moins 70% en masse, du mortier de ciment, du béton, ou du plâtre ;
- le manchon comprend, à au moins 70% en masse, un colloïde, le colloïde étant notamment une colle, un gel ou une cire ;
- le manchon présente radialement une épaisseur, le ratio de l'extension longitudinale de l'enveloppe sur l'épaisseur étant compris entre 0,5 et 7 ;
- l'élément traversant et l'enveloppe sont sensiblement coaxiaux, et de préférence de section sensiblement circulaire ;
- l'ensemble comprend en outre un matériau de remplissage, de préférence en mortier de ciment, destiné à combler un espace vide situé entre l'élément traversant et la paroi de séparation ;
- l'enveloppe elle-même est réalisée en une matière permettant une isolation acoustique et/ou mécanique ; et
- la bande est fixée au préalable à l'enveloppe, en tant que doublure.

L'invention a également pour objet un procédé selon la revendication 11.

Selon des modes particuliers de réalisation, le procédé comprend l'une ou plusieurs des caractéristiques correspondant aux revendications 12 à 15, prise(s) isolément ou selon toutes les combinaisons techniquement possibles.

L'invention sera mieux comprise à la lecture de la description qui va suivre, donnée uniquement à titre d'exemple, et faite en se référant aux dessins annexés, sur lesquels :
- la figure 1 est une vue en perspective d'un ensemble selon l'invention, dans lequel l'élément traversant comporte une jonction et s'étend à travers une dalle de séparation, le manchon s'étendant au-dessus de la dalle,
- la figure 2 est une vue en coupe verticale de l'ensemble représenté sur la figure 1, pendant son installation,
- la figure 3 est une vue d'un détail de l'ensemble représenté sur les figures 1 et 2, le détail se situant là où l'enveloppe rejoint un coffrage temporaire,
- la figure 4 est une vue en perspective d'une variante de l'enveloppe représentée sur les figures 1 à 3, et
- la figure 5 est une vue en coupe verticale de l'enveloppe représentée sur la figure 4.

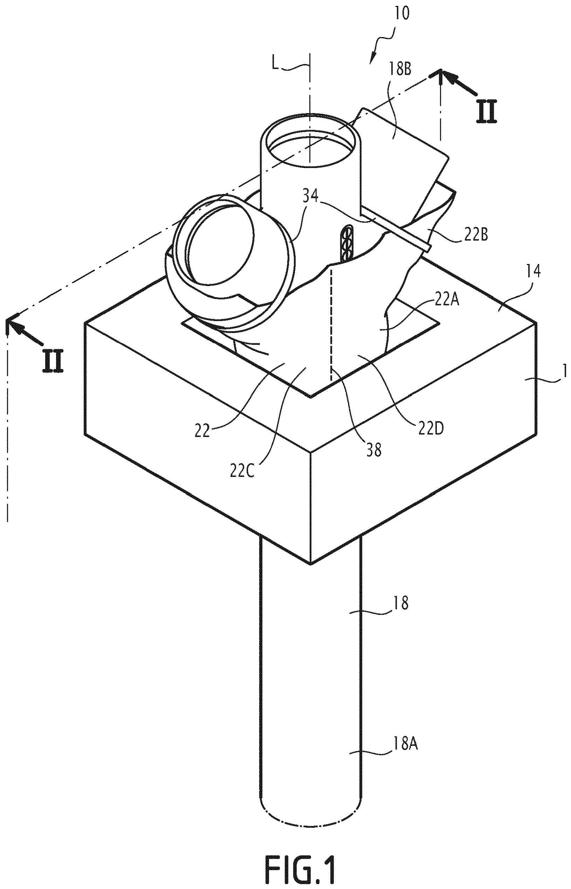

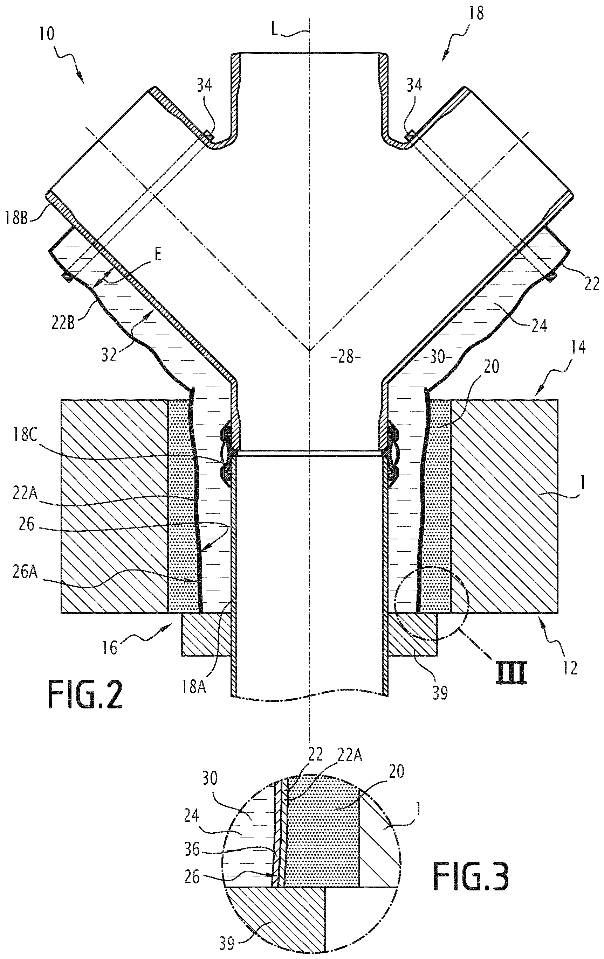

En référence aux figures 1 et 2, on décrit une paroi de séparation 1 qui forme une dalle appartenant par exemple à un bâtiment (non représenté), et un ensemble 10 selon l'invention.

La paroi de séparation 1 est par exemple sensiblement horizontale et avantageusement réalisée en béton. Elle comprend un côté inférieur 12 susceptible d'être exposé à un incendie et, un côté supérieur 14 que l'on souhaite protéger de l'incendie. La paroi de séparation 1 définit en outre un passage 16 entre le côté inférieur 12 et le côté supérieur 14.

L'ensemble 10 comprend un élément traversant 18 s'étendant sensiblement selon une direction longitudinale L à travers le passage 16 de la paroi de séparation, un matériau de calfeutrement 20 s'étendant entre l'élément traversant et la paroi de séparation 1, une enveloppe 22 en matériau souple disposée autour de l'élément traversant, et un manchon 24 propre à agir comme un coupe-feu à caractère dissipatif.

L'élément traversant 18 est par exemple une canalisation destinée à transporter des effluents liquides, du gaz ou un autre fluide sous pression ou non, une gaine pour des installations électriques ou de télécommunication, ou encore un conduit d'aération ou d'extraction de fumées. L'élément traversant 18 est en métal, de préférence en fonte, mais peut aussi être en un autre matériau tel que par exemple une matière plastique.

L'élément traversant 18 s'étend de part et d'autre de la paroi de séparation 1 selon la direction longitudinale L.

L'élément traversant 18 comporte par exemple une partie tubulaire 18A, un raccord 18B, et un organe de jonction 18C permettant de fixer le raccord sur la partie tubulaire.

Le raccord 18B possède par exemple trois embranchements tubulaires. Le raccord 18B est par exemple situé au-dessus de la paroi de séparation 1.

Chaque partie tubulaire de l'élément traversant 18 présente par exemple une section circulaire.

La direction longitudinale L est par exemple sensiblement verticale, c'est-à-dire, dans l'exemple représenté, sensiblement perpendiculaire à la paroi de séparation 1.

Selon une variante non représentée, la direction longitudinale L et l'élément traversant 18 forment un angle non nul avec la verticale au niveau de la paroi de séparation 1. Cet angle est par exemple compris entre 0° et 45°.

Selon une autre variante non représentée, la paroi de séparation 1 est un mur, par exemple sensiblement vertical, et la direction longitudinale L est par exemple sensiblement horizontale.

Le matériau de calfeutrement 20 est par exemple un matériau de désolidarisation acoustique ou mécanique, tel que du polyéthylène ou une matière intumescente, une laine minérale, un mortier de ciment, ou un matériau identique à celui de la paroi de séparation 1.

Par « désolidarisation mécanique », on entend ici que le matériau de calfeutrement 20 est résilient et est capable d'absorber des vibrations au niveau de la paroi de séparation 1.

Le matériau de calfeutrement 20 s'étend avantageusement sur toute l'épaisseur de la paroi de séparation 1 selon la direction longitudinale L.

Le matériau de calfeutrement 20 est adapté pour boucher le passage 16 entre l'enveloppe 22 et la paroi de séparation 1.

L'enveloppe 22 comporte une partie tubulaire 22A entourant la partie tubulaire 18A de l'élément traversant 18, et avantageusement une partie évasée 22B entourant le raccord 18B.

L'enveloppe 22 comprend un tissu à base de matières minérales, organiques ou végétales présent dans une portion de l'enveloppe correspondant à au moins 50% de l'aire de l'enveloppe. Par exemple, sur au moins 50% de son aire, l'enveloppe 22 comprend un tissu de polyéthylène (PE) ou de verre, ou une toile formée de polyéthylène haute densité (PEHD) tissé et d'un laminage en polyéthylène, ou une toile formée de polypropylène (PP) tissé et d'un laminage en polyéthylène.

Le tissu dont il est question forme par exemple une surface externe ou une surface interne de l'enveloppe 22, ou encore est noyé dans l'enveloppe (pris en sandwich). Selon des variantes, la localisation du tissu dans l'épaisseur de l'enveloppe 22 varie. Au moins 50% surfaciques de l'enveloppe 22 sont concernés par la présence du tissu.

L'enveloppe 22 est combustible, le manchon 24 l'empêchant de se consumer en cas d'incendie.

Selon une variante, l'enveloppe 22 est incombustible et comprend par exemple moins de 5% en masse d'oxygène.

Par « incombustible », on entend par exemple que l'enveloppe 22 résiste à de hautes températures, et avantageusement que l'enveloppe 22 ne se consume pas au-dessous de 200 °C.

L'enveloppe 22 définit un volume interne 28 traversé longitudinalement par l'élément traversant 18, et définit avec ce dernier un volume interstitiel 30 occupé par le manchon 24.

L'enveloppe 22 présente une forme adaptée pour entourer l'élément traversant 18. Selon une variante non représentée, la forme de l'enveloppe 22 est adaptée pour entourer individuellement chacun des embranchements du raccord 18B.

L'enveloppe 22 est suffisamment étanche, une fois en place, pour permettre la mise en place du manchon 24 par coulée ou injection dans le volume interstitiel 30. Par « suffisamment étanche », on entend par exemple que l'enveloppe est étanche à l'eau liquide.

Selon une variante, l'enveloppe 22 est fendue, par exemple selon une ligne 38 représentée sur la figure 1, pour former de part et d'autre de la fente, deux extrémités libres 22C, 22D fixées l'une sur l'autre par des bandes auto-agrippantes (non représentées) ou par une fermeture à glissière (non représentée). Ceci permet l'installation a posteriori de l'enveloppe sur un élément traversant préalablement mis en place à travers la paroi de séparation.

L'enveloppe 22 comporte une surface interne 26. La partie tubulaire 22A comporte une surface interne avantageusement parallèle à la direction longitudinale L. La partie tubulaire 22A présente par exemple une section circulaire perpendiculairement à la direction longitudinale L, et est avantageusement coaxiale avec l'élément traversant 18.

La partie tubulaire 22A est située dans la paroi de séparation 1 en projection sur la direction longitudinale L. Comme visible sur la figure 2, l'enveloppe 22 s'étend selon la direction longitudinale L sur toute l'épaisseur de la paroi de séparation 1 et jusqu'au bord inférieur de la paroi de séparation 1.

Selon des variantes non représentées, l'enveloppe 22 s'étend selon la direction longitudinale L au-delà ou en deçà du bord inférieur de la paroi de séparation 1.

La partie évasée 22B présente une forme d'entonnoir s'évasant vers le haut. Dans l'exemple représenté, la partie évasée 22B se situe au-dessus de la paroi de séparation.

Selon une autre variante non représentée, l'enveloppe 22, une fois mise en place, se situe entièrement au-dessus ou entièrement en-dessous de la paroi de séparation 1.

Le manchon 24 s'étend radialement entre la surface interne 26 de l'enveloppe 22 et une surface externe 32 de l'élément traversant 18.

Le manchon 24 comprend une substance ayant une capacité thermique volumique d'au moins 1000 kJ/(m³.K) et/ou une chaleur latente massique de changement d'état physique, dans une plage de températures comprises entre 0°C et 210°C, au moins égale à 200 kJ/kg. Cette substance est adaptée pour subir une transition de phase endothermique dans une plage de températures comprises entre 0°C et 210°C, et ce par fusion ou vaporisation.

Avantageusement, cette substance est de l'eau, une huile ou une cire.

Le manchon 24 comprend un liant hydraulique, et est avantageusement constitué de mortier de ciment, de béton ou de plâtre.

En variante, le manchon 24 est un mélange d'un matériau à base d'un liant hydraulique et d'un colloïde.

Avantageusement l'ensemble 10 comprend aussi une ou plusieurs sangles 34 pour maintenir l'enveloppe 22 lors de son remplissage par le matériau coupe-feu ou modifier la forme de l'enveloppe après sa mise en place, de manière à conférer au manchon 24 une épaisseur E sensiblement uniforme. L'épaisseur E est mesurée radialement à partir de la surface externe 32 de l'élément traversant 18.

Avantageusement, l'ensemble 10 comprend une bande 36 adaptée pour former un isolant acoustique et/ou mécanique. La bande 36 est située contre la surface interne 26 de l'enveloppe 22 et forme par exemple une doublure de l'enveloppe 22.

Selon une variante (non représentée), la bande 36 est située au moins en partie contre une surface externe 26A de l'enveloppe 22.

Selon une autre variante (non représentée), la bande 36 est posée contre la surface externe 32 de l'élément traversant 18.

Un procédé d'installation de l'ensemble 10 va maintenant être décrit.

Tout d'abord, au moment où l'élément traversant 18 est installé à travers la paroi de séparation 1, ou bien après l'installation de l'élément traversant, l'enveloppe 22 est mise en place autour de l'élément traversant. La bande 36 est disposée à l'intérieur de l'enveloppe 22, contre la surface interne 26, avantageusement en tant que doublure de l'enveloppe 22.

Selon une variante non représentée, l'élément traversant 18 est scellé dans la paroi de séparation 1 avant la mise en place de l'enveloppe 22. La bande 36 est alors installée au contact de la surface externe 26A de l'enveloppe 22 et par exemple au contact de la surface supérieure 14 de la paroi de séparation 1.

En général, l'élément traversant 18 est réalisé en plusieurs sections 18A, 18B, la jonction 18C entre les deux sections les plus proches de la paroi de séparation 1 étant par exemple placée dans le passage 16.

Un coffrage de maintien 39 est réalisé sous l'enveloppe 22 autour de l'élément traversant 18 pour éviter que l'enveloppe ne s'effondre lors de l'installation du manchon 24. Un tel coffrage est également réalisé lorsque l'enveloppe 22 s'étend longitudinalement sous la paroi de séparation 1. Ce coffrage n'est pas toujours utile, notamment lorsque l'enveloppe 22 s'étend uniquement au-dessus de la paroi de séparation 1 et que le matériau de calfeutrement 20 a été mis en place avant l'installation du manchon 24.

Les sangles 34 sont ensuite placées autour de l'enveloppe 22 et du raccord 18B pour maintenir celle-ci et garantir ainsi, lors de la mise en place du manchon 24, que l'épaisseur E du manchon soit sensiblement uniforme autour de l'élément traversant 18.

Ensuite, le manchon 24 est par exemple coulé entre la surface externe 32 de l'élément traversant 18 et la surface interne 26 de l'enveloppe 22. Le mortier de ciment, le béton, le plâtre ou autre matériau formant le manchon 24 vient combler le volume interstitiel 30 partiellement ou en totalité.

Enfin, le matériau de calfeutrement 20 est mis en place entre l'enveloppe 22 et la paroi de séparation 1.

En variante, le manchon 24 et le matériau de calfeutrement 20 sont en un même matériau et sont mis en place au même moment.

En variante encore, l'enveloppe 22 est retirée après mise en place et prise du manchon 24. Cependant, il est préférable de laisser l'enveloppe 22 en place autour du manchon 24.

Selon une autre variante non représentée, si le matériau de calfeutrement 20 est mis en place avant que le manchon 24 soit installé, une entretoise amovible (non représentée), par exemple une laine ou une mousse, est installée dans l'espace interstitiel 30 pour rigidifier temporairement l'enveloppe 22 et réserver le volume destiné par la suite au manchon 24. L'entretoise amovible est retirée lorsque le matériau de calfeutrement 20 a durci, de manière à pouvoir installer le manchon 24.

Le coffrage de maintien 39 est éventuellement retiré une fois que le manchon 24 a durci.

Le fonctionnement de l'ensemble 10 se déduit de sa structure et va maintenant être décrit brièvement.

Si un incendie se développe du côté inférieur 12 de la paroi de séparation 1, un flux de chaleur se met à remonter par les parois à base de fer de l'élément traversant 18.

Une partie importante du flux de chaleur passe de l'élément traversant 18 dans le manchon 24 qui est en contact avec les parois de l'élément traversant.

Ainsi, l'échauffement de l'élément traversant 18 au-dessus du manchon 24 est limité. De même, l'échauffement de la surface externe 26A de l'enveloppe 22 et du côté supérieur 14 de la paroi de séparation 1 est également limité.

En outre, lorsqu'elle est incombustible, l'enveloppe 22 forme un fourreau qui maintient le manchon 24 et l'empêche de se détériorer, de se désagréger ou même de s'effondrer du fait de l'incendie. Ceci prolonge la protection conférée par le manchon 24.

Le manchon 24 est réalisable simplement. Il n'est par exemple pas nécessaire de l'armer.

L'ensemble 10 présente l'avantage de faire appel à des matériaux bons marchés.

Ainsi, grâce aux caractéristiques ci-dessus, l'ensemble 10 permet de lutter efficacement contre la propagation d'un incendie du côté de la paroi de séparation exposé au feu vers l'autre côté. La réalisation et l'installation de l'ensemble 10 sont à la fois simples et économiques.

Grâce à sa souplesse, l'enveloppe 22 est facile à installer.

Dans le cas optionnel où l'enveloppe 22 comporte les extrémités libres 22C, 22D à fixer l'une à l'autre, l'enveloppe s'installe très facilement, notamment autour d'éléments traversants comportant un ou plusieurs raccords tels que le raccord 18B, c'est-à-dire comportant des embranchements.

La tendance du marché est d'assurer une protection contre le feu d'au moins deux heures et jusqu'à quatre heures. Grâce à l'ensemble 10, une durée de résistance au feu de quatre heures est facilement atteinte.

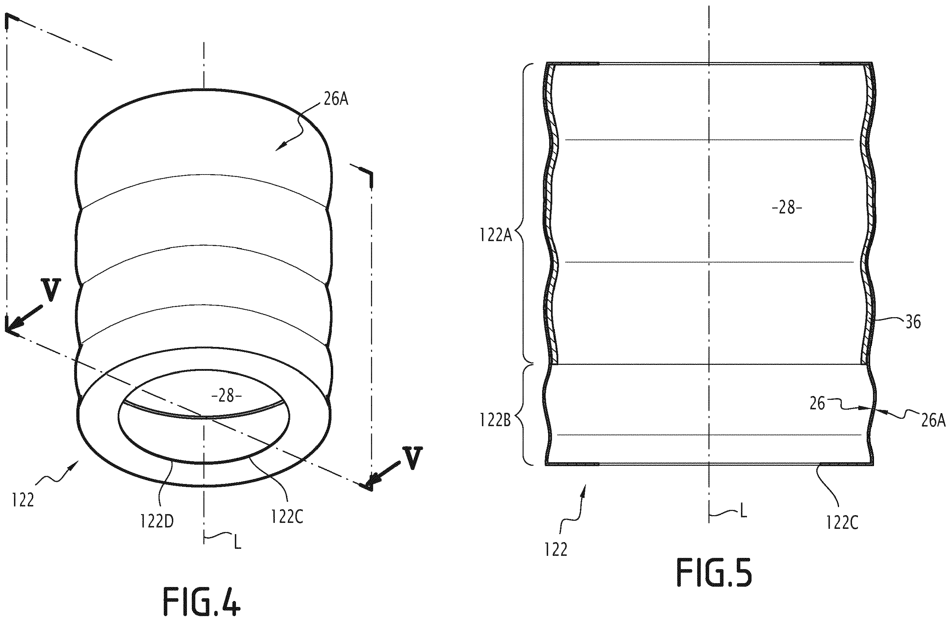

En référence aux figures 4 et 5, on décrit une enveloppe 122 constituant une variante de l'enveloppe 22. L'enveloppe 122 est analogue à l'enveloppe 22 représentée sur les figures 1 à 3. Les éléments similaires sont désignés sur les figures 4 et 5 par les mêmes références numériques et ne seront pas décrits à nouveau. Seules les différences seront décrites en détail ci-après.

L'enveloppe 122 comporte une première partie 122A de forme tubulaire, et au moins une extrémité 122B selon la direction longitudinale L formant un lacet 122C fermé autour de la direction longitudinale.

Le lacet 122C et adapté pour être serré autour de l'élément traversant 18.

L'extrémité 122B comporte avantageusement un organe élastique 122D s'étendant le long du lacet 122C pour assurer un serrage du lacet autour de l'élément traversant 18. Avantageusement, l'enveloppe 122 est installée autour de l'élément traversant de manière telle que le lacet 122C forme le bord inférieur de l'enveloppe, le serrage du lacet 122C autour de l'élément traversant assurant l'étanchéité pendant la coulée ou l'injection du manchon 24 dans le volume interstitiel 30.

L'enveloppe 122 s'installe et fonctionne sensiblement comme l'enveloppe 22.

## Revendications

1. - Ensemble (10) comprenant :
- un élément traversant (18) destiné à traverser une paroi de séparation (1) selon une direction longitudinale (L),
- au moins une enveloppe (22 ; 122), et
- au moins un manchon (24) destiné à agir comme un coupe-feu, le manchon (24) étant adapté pour être installé, après la mise en place de l'enveloppe (22 ; 122), dans un espace interstitiel (30) défini au moins par une surface externe (32) de l'élément traversant (18) et une surface interne (26) de l'enveloppe (22 ; 122) mise en place, l'enveloppe (22 ; 122) étant suffisamment étanche pour que le manchon (24) soit coulé, injecté ou disposé dans l'espace interstitiel (30),
dans lequel l'enveloppe (22 ; 122) est en matériau souple et est mise en place au moins temporairement autour de l'élément traversant (18), **caractérisé en ce que** le manchon (24) comprend un liant hydraulique.

2. - Ensemble (10) selon la revendication 1, dans lequel le liant hydraulique est constitué de mortier de ciment, de béton ou de plâtre.

3. - Ensemble (10) selon la revendication 1 ou 2, dans lequel l'enveloppe (22 ; 122) comprend un tissu à base de matières minérales, organiques ou végétales, ledit tissu étant présent dans une portion de l'enveloppe (22 ; 122) s'étendant sur au moins 50% de l'aire de l'enveloppe (22 ; 122).

4. Ensemble (10) selon l'une quelconque des revendications 1 à 3, dans lequel l'enveloppe (22 ; 122) comprend un tissu de polyéthylène (PE) ou de verre, ou une toile formée de polyéthylène haute densité (PEHD) tissé et d'un laminage en polyéthylène, ou une toile formée de polypropylène (PP) tissé et d'un laminage en polyéthylène, ledit tissu étant présent dans une portion de l'enveloppe (22 ; 122) s'étendant sur au moins 50% de l'aire de l'enveloppe (22 ; 122).

5. Ensemble (10) selon l'une quelconque des revendications 1 à 4, dans lequel l'enveloppe (22 ; 122) est incombustible, et comprend avantageusement moins de 5% en masse d'oxygène.

6. Ensemble (10) selon l'une quelconque des revendications 1 à 5, comprenant en outre une bande (36) adaptée pour former un isolant acoustique et/ou mécanique, la bande (36) étant située au moins en partie sur la surface interne (26) ou sur une surface externe (26A) de l'enveloppe (22 ; 122).

7. Ensemble (10) selon l'une quelconque des revendications 1 à 6, dans lequel l'enveloppe (22 ; 122) comporte au moins une extrémité (122B) selon la direction longitudinale (L), l'extrémité (122B) formant un lacet (122C) fermé et adapté pour être serré autour de l'élément traversant (18).

8. Ensemble (10) selon la revendication 7, dans lequel ladite extrémité (122B) comporte un organe élastique (122D) s'étendant le long du lacet (122C) pour assurer un serrage du lacet (122C) autour de l'élément traversant (18).

9. Ensemble (10) selon l'une quelconque des revendications 1 à 8, dans lequel l'enveloppe (22 ; 122) définit au moins deux extrémités libres (22C ; 22D) mobiles entre une configuration ouverte, dans laquelle les deux extrémités libres (22C ; 22D) sont à l'écart l'une de l'autre, et une configuration fermée, dans laquelle les deux extrémités libres (22C ; 22D) sont fixées l'une sur l'autre par des bandes auto-agrippantes ou par une fermeture à glissière.

10. Ensemble (10) selon l'une quelconque des revendications 1 à 9, dans lequel :
- l'enveloppe (22 ; 122) mise en place comprend une partie (22A) située dans la paroi de séparation (1) en projection sur la direction longitudinale (L), ou
- l'enveloppe (22; 122) mise en place se situe entièrement au-dessus ou entièrement en-dessous de la paroi de séparation (1).

11. - Procédé d'installation d'un manchon (24) destiné à agir comme un coupe-feu au niveau d'une paroi de séparation (1) traversée par un élément traversant (18) selon une direction longitudinale (L), le procédé comprenant au moins les étapes suivantes :
- mise en place, au moins temporairement, d'une enveloppe (22 ; 122) en matériau souple autour de l'élément traversant (18),
- fourniture du manchon (24), le manchon (24) comprenant un liant hydraulique, de préférence constitué de mortier de ciment, de béton ou de plâtre,
- installation du manchon (24) dans un espace interstitiel (30) défini au moins par une surface externe (32) de l'élément traversant (18) et une surface interne (26) de l'enveloppe (22 ; 122) mise en place, l'enveloppe (22 ; 122) étant suffisamment étanche, le manchon (24) étant coulé, injecté ou disposé dans l'espace interstitiel (30), et
- optionnellement retrait de l'enveloppe (22 ; 122) après solidification du manchon (24).

12. - Procédé selon la revendication 11, dans lequel la mise en place de l'enveloppe (22 ; 122) comprend l'installation d'une partie (22A) de l'enveloppe (22 ; 122) dans la paroi de séparation (1) en projection sur la direction longitudinale (L), le procédé comprenant en outre les étapes suivantes avant l'installation du manchon (24) :
- installation d'une entretoise amovible, par exemple une laine ou une mousse, dans l'espace interstitiel (30) pour rigidifier temporairement l'enveloppe (22 ; 122),
- mise en place d'un matériau de calfeutrement (20) entre la paroi de séparation (1) et l'enveloppe (22 ; 122) rigidifiée, et
- retrait de l'entretoise amovible.

13. - Procédé selon la revendication 11, comprenant en outre, avant l'installation du manchon (24), une étape de mise en place temporaire d'une bague de maintien ou d'un coffrage de maintien (39) sous l'enveloppe (22 ; 122) pour éviter que l'enveloppe (22 ; 122) ne s'effondre lors de l'installation du manchon (24).

14. - Procédé selon la revendication 11, dans lequel l'élément traversant (18) est scellé dans la paroi de séparation (1) avant la mise en place de l'enveloppe (22 ; 122), le procédé comprenant en outre une étape d'installation d'une bande (36) formant un isolant acoustique et/ou mécanique, la bande (36) étant installée au contact d'une surface externe (26A) de l'enveloppe (22 ; 122) et au contact d'une surface supérieure (12) ou d'une surface inférieure (14) de la paroi de séparation (1).

15. - Procédé selon l'une quelconque des revendications 11 à 14, dans lequel l'élément traversant (18) comprend au moins un raccord (18B), le procédé comprenant en outre une étape d'utilisation un organe (34), tel qu'une sangle, pour modifier la forme de l'enveloppe (22 ; 122) après sa mise en place et pour conférer au manchon (24) une épaisseur (E) sensiblement uniforme, l'épaisseur (E) étant mesurée radialement à partir d'une surface externe (32) de l'élément traversant (18).

## Patentansprüche

1. Anordnung (10), umfassend:
- ein Durchgangselement (18), das dazu bestimmt ist, eine Trennwand (1) in einer Längsrichtung (L) zu durchqueren,
- mindestens eine Hülle (22; 122), und
- mindestens eine Hülse (24), die dazu bestimmt ist, als Brandschutz zu wirken, wobei die Hülse (24) angepasst ist, um nach dem Anbringen der Hülle (22; 122) in einem Zwischenraum (30) installiert zu werden, der mindestens durch eine Außenfläche (32) des Durchgangselements (18) und eine Innenfläche (26) der angebrachten Hülle (22; 122) definiert ist; wobei die Hülle (22; 122) ausreichend dicht ist, damit die Hülse (24) in den Zwischenraum (30) gegossen, injiziert oder darin angeordnet werden kann,
wobei die Hülle (22; 122) aus einem flexiblen Material ist und zumindest vorübergehend um das Durchgangselement (18) angeordnet ist, **dadurch gekennzeichnet, dass** die Hülse (24) ein hydraulisches Bindemittel umfasst.

2. Anordnung (10) nach Anspruch 1, wobei das hydraulische Bindemittel aus Zementmörtel, Beton oder Gips besteht.

3. Anordnung (10) nach Anspruch 1 oder 2, wobei die Hülle (22; 122) ein Gewebe auf Basis von mineralischen, organischen oder pflanzlichen Materialien umfasst, wobei das Gewebe in einem Abschnitt der Hülle (22; 122) vorhanden ist, der sich über mindestens 50 % der Fläche der Hülle (22; 122) erstreckt.

4. Anordnung (10) nach einem der Ansprüche 1 bis 3, wobei die Hülle (22; 122) ein Gewebe aus Polyethylen (PE) oder Glas oder ein Gewebe aus gewebtem Polyethylen hoher Dichte (HDPE) und einer Polyethylen-Laminierung oder ein Gewebe aus gewebtem Polypropylen (PP) und einer Polyethylen-Laminierung umfasst, wobei das Gewebe in einem Abschnitt der Hülle (22; 122) vorhanden ist, der sich über mindestens 50 % der Fläche der Hülle (22; 122) erstreckt.

5. Anordnung (10) nach einem der Ansprüche 1 bis 4, wobei die Hülle (22; 122) nicht brennbar ist und vorteilhafterweise weniger als 5 Masse-% Sauerstoff umfasst.

6. Anordnung (10) nach einem der Ansprüche 1 bis 5, die ferner umfassend einen Streifen (36), der angepasst ist, um eine akustische und/oder mechanische Isolierung zu bilden, wobei sich der Streifen (36) zumindest teilweise auf der Innenfläche (26) oder einer Außenfläche (26A) der Hülle (22; 122) befindet.

7. Anordnung (10) nach einem der Ansprüche 1 bis 6, wobei die Hülle (22; 122) mindestens ein Ende (122B) in Längsrichtung (L) aufweist, wobei das Ende (122B) eine geschlossene Schlaufe (122C) bildet und angepasst ist, um das Durchgangselement (18) festgezogen zu werden.

8. Anordnung (10) nach Anspruch 7, wobei das Ende (122B) ein elastisches Element (122D) umfasst, das sich entlang der Schlaufe (122C) erstreckt, um ein Festziehen der Schlaufe (122C) um das Durchgangselement (18) zu gewährleisten.

9. Anordnung (10) nach einem der Ansprüche 1 bis 8, wobei die Hülle (22; 122) mindestens zwei freie Enden (22C; 22D) definiert, die zwischen einer offenen Konfiguration, in der die zwei freien Enden (22C; 22D) voneinander beabstandet sind, und einer geschlossenen Konfiguration, in der die zwei freien Enden (22C; 22D) durch Klettverschlüsse oder durch einen Reißverschluss aneinander befestigt sind, beweglich sind.

10. Anordnung (10) nach einem der Ansprüche 1 bis 9, wobei:
- die angebrachte Hülle (22; 122) ein Teil (22A) umfasst, das sich Längsrichtung (L) hervorstehend in der Trennwand (1) befindet, oder
- die angebrachte Hülle (22; 122) sich vollständig oberhalb oder vollständig unterhalb der Trennwand (1) befindet.

11. Verfahren zum Installieren einer Hülse(24), die dazu bestimmt ist, als Brandschutz an einer Trennwand (1) zu wirken, die ein Durchgangselement (18) in einer Längsrichtung (L) durchquert, wobei das Verfahren mindestens die folgenden Schritte umfasst:
- zumindest zeitweiliges Anbringen einer Hülle (22; 122) aus flexiblem Material um das Durchgangselement (18),
- Bereitstellen der Hülse (24), die Hülse (24) umfassend ein hydraulisches Bindemittel, das vorzugsweise aus Zementmörtel, Beton oder Gips besteht,
- Installieren der Hülse (24) in einem Zwischenraum (30), der zumindest durch eine Außenfläche (32) des Durchgangselements (18) und eine Innenfläche (26) der eingesetzten Hülle (22; 122) definiert ist, wobei die Hülle (22; 122) ausreichend dicht ist, wobei die Hülse (24) in den Zwischenraum (30) gegossen, injiziert oder angeordnet wird, und
- optional Entfernen der Hülle (22; 122) nach Verfestigen der Hülse (24).

12. Verfahren nach Anspruch 11, wobei das Anbringen der Hülle (22; 122) das Anbringen eines Teils (22A) der Hülle (22; 122) in der Trennwand (1) umfasst, die in Längsrichtung (L) hervorsteht, wobei das Verfahren vor Anbringen der Hülse (24) ferner die folgenden Schritte umfasst:
- Installieren eines entfernbaren Abstandshalters, z. B. einer Wolle oder eines Schaumstoffs, in dem Zwischenraum (30), um die Hülle (22; 122) vorübergehend zu versteifen,
- Anbringen eines Dichtungsmaterials (20) zwischen der Trennwand (1) und der versteiften Hülle (22; 122), und
- Abnehmen des entfernbaren Abstandshalters.

13. Verfahren nach Anspruch 11, ferner umfassend, vor der Installation der Hülse (24), einen Schritt eines vorübergehenden Anbringens eines Halterings oder einer Halteschalung (39) unter der Hülle (22; 122), um zu verhindern, dass die Hülle (22; 122) bei der Installation der Hülse (24) zusammenbricht.

14. Verfahren nach Anspruch 11, wobei das Durchgangselement (18) vor dem Anbringen der Hülle (22; 122) in die Trennwand (1) abgedichtet wird, wobei das Verfahren ferner einen Schritt eines Anbringens eines Streifens (36) umfasst, der eine akustische und/oder mechanische Isolierung bildet, wobei der Streifen (36) in Kontakt mit einer Außenfläche (26A) der Hülle (22; 122) und in Kontakt mit einer oberen Fläche (12) oder einer unteren Fläche (14) der Trennwand (1) installiert wird.

15. Verfahren nach einem der Ansprüche 11 bis 14, wobei das Durchgangselement (18) mindestens ein Verbindungsstück (18B) umfasst, das Verfahren ferner umfassend einen Schritt, bei dem ein Organ (34), wie z. B. ein Gurt, verwendet wird, um die Form der Hülle (22; 122) nach ihre Anbringen zu verändern und um der Hülse (24) eine im Wesentlichen gleichmäßige Stärke (E) zu verleihen, wobei die Stärke (E) radial von einer Außenfläche (32) des Durchgangselements (18) aus gemessen wird.

## Claims

1. An assembly (10) comprising:
- a through element (18) for passing through a partition wall (1) in a longitudinal direction (L),
- at least one envelope (22; 122), and
- at least one sleeve (24) intended to act as a firewall, the sleeve (24) being adapted to be installed, after the installation of the envelope (22; 122), in an interstitial space (30) defined at least by an outer surface (32) of the through element (18) and an inner surface (26) of the installed envelope (22; 122), the envelope (22; 122) being sufficiently tight for the sleeve (24) to be cast, injected or disposed in the interstitial space (30),
wherein the envelope (22; 122) is of flexible material and is fitted at least temporarily around the through element (18), **characterised in that** the sleeve (24) comprises a hydraulic binder.

2. The assembly (10) according to claim 1, wherein the hydraulic binder consists of cement mortar, concrete or plaster.

3. The assembly (10) according to claim 1 or 2, wherein the envelope (22; 122) comprises a fabric made from mineral, organic or vegetable materials, said fabric being present in a portion of the envelope (22; 122) extending over at least 50% of the area of the envelope (22; 122).

4. The assembly (10) according to any one of claims 1 to 3, wherein the envelope (22; 122) comprises a polyethylene (PE) or glass fabric, or a woven high density polyethylene (HDPE) fabric and polyethylene lamination, or a woven polypropylene (PP) fabric and polyethylene lamination, said fabric being present in a portion of the envelope (22; 122) extending over at least 50% of the area of the envelope (22; 122).

5. The assembly (10) according to any one of claims 1 to 4, wherein the envelope (22; 122) is non-combustible, and advantageously comprises less than 5% by mass of oxygen.

6. The assembly (10) according to any one of claims 1 to 5, further comprising a strip (36) adapted to form an acoustic and/or mechanical insulator, the strip (36) being located at least in part on the inner surface (26) or on an outer surface (26A) of the envelope (22; 122).

7. The assembly (10) according to any one of claims 1 to 6, wherein the envelope (22; 122) has at least one end (122B) along the longitudinal direction (L), the end (122B) forming a closed lace (122C) and adapted to be tightened around the through element (18).

8. The assembly (10) according to claim 7, wherein said end (122B) comprises a resilient member (122D) extending along the lace (122C) to provide a tightening of the lace (122C) around the through element (18).

9. The assembly (10) according to any one of claims 1 to 8, wherein the envelope (22; 122) defines at least two free ends (22C; 22D) movable between an open configuration, in which the two free ends (22C; 22D) are spaced apart from each other, and a closed configuration, in which the two free ends (22C; 22D) are secured together by hook-and-loop fasteners or by a zipper.

10. The assembly (10) according to any one of claims 1 to 9, wherein:
- the envelope (22; 122) in place comprises a part (22A) located in the partition wall (1) in projection on the longitudinal direction (L), or
- the envelope (22; 122) is located entirely above or entirely below the partition wall (1).

11. A method of installing a sleeve (24) intended to act as a firewall at a partition wall (1) through which a through element (18) passes in a longitudinal direction (L), the method comprising at least the following steps:
- placing, at least temporarily, an envelope (22; 122) of flexible material around the through element (18),
- providing the sleeve (24), the sleeve (24) comprising a hydraulic binder, preferably consisting of cement mortar, concrete or plaster,
- installing the sleeve (24) in an interstitial space (30) defined at least by an outer surface (32) of the through element (18) and an inner surface (26) of the installed envelope (22; 122), the envelope (22; 122) being sufficiently sealed, the sleeve (24) being cast, injected or disposed in the interstitial space (30), and
- optionally removing the envelope (22; 122) after the sleeve (24) has solidified.

12. The method according to claim 11, wherein the installation of the envelope (22; 122) comprises installing a part (22A) of the envelope (22; 122) in the partition wall (1) protruding in the longitudinal direction (L), the method further comprising the following steps prior to installing the sleeve (24):
- installing a removable spacer, for example wool or foam, in the interstitial space (30) to temporarily stiffen the envelope (22; 122),
- placing a sealing material (20) between the partition wall (1) and the stiffened envelope (22; 122), and
- removing the removable spacer.

13. The method according to claim 11, further comprising, prior to installing the sleeve (24), a step of temporarily placing a retaining ring or retaining formwork (39) under the envelope (22; 122) to prevent the envelope (22; 122) from collapsing during the installation of the sleeve (24).

14. The method according to claim 11, wherein the through element (18) is sealed into the partition wall (1) prior to installing the envelope (22; 122), the method further comprising a step of installing a strip (36) forming an acoustic and/or mechanical insulator, the strip (36) being installed in contact with an outer surface (26A) of the envelope (22; 122) and in contact with an upper surface (12) or a lower surface (14) of the partition wall (1).

15. The method according to any one of claims 11 to 14, wherein the through element (18) comprises at least one fitting (18B), the method further comprising a step of using a member (34), such as a strap, to modify the shape of the envelope (22; 122) after installation and to impart to the sleeve (24) a substantially uniform thickness (E), the thickness (E) being measured radially from an outer surface (32) of the through element (18).
